# EUROPÄISCHE PATENTSCHRIFT

(11) **EP 4 185 784 B1**
(45) Veröffentlichungstag und Bekanntmachung des Hinweises auf die Patenterteilung: **04.09.2024**
(21) Anmeldenummer: 21735936.3
(22) Anmeldetag: 24.06.2021
(51) Int. Cl.: F16C 19/36, F16C 35/063, F16C 35/067, F16C 33/72, F16C 41/04

(54) **VERFAHREN ZUM HERSTELLEN EINES GETRIEBES**
METHOD FOR PRODUCING A GEAR UNIT
PROCÉDÉ DE PRODUCTION D'UNE UNITÉ D'ENGRENAGE

(30) Priorität: 24.07.2020 DE 102020004494
(43) Veröffentlichungstag der Anmeldung: 31.05.2023
(73) Patentinhaber: SEW-EURODRIVE GmbH & Co. KG, 76646 Bruchsal (DE)
(72) Erfinder: STRAUSSS, Dietmar, 76703 Kraichtal (DE); RUPPANER, Christoph, 76703 Kraichtal (DE)
(86) Internationale Anmeldenummer: PCT/EP2021/067391
(87) Internationale Veröffentlichungsnummer: WO 2022/017720

(56) Entgegenhaltungen:
- WO-A1-2013/152850
- DE-A1- 102008 036 223
- DE-B3- 102013 226 552

## Beschreibung

Die Erfindung betrifft ein Verfahren zum Herstellen eines Getriebes.

Es ist allgemein bekannt, dass bei Schräglagern radial wirkende Kräfte axiale Kraftkomponenten bewirken.

Aus der US 2014 / 0 178 119 A1 ist eine Befestigungsmethode für rotierende Maschinen bekannt.

Aus der US 2006 / 0 002 644 A1 ist eine Lageranordnung für ein Rad bekannt.

Aus der DE 10 2013 226 552 B3 ist eine Montagevorrichtung für ein Wälzlager bekannt.

Aus der DE 10 2013 018 710 A1 ist ein Getriebe mit Gehäuse bekannt.

**Aus der** DE 10 2008 036223 A1 **ist eine Lageranordnung und ein Verfahren zur Montage einer montagfertigen Lagereinheit darin bekannt.**

**Aus der** WO 2013/152850 A1 **ist eine Lageranordnung sowie ein Verfahren zur Einstellung der Vorspannung einer Lageranordnung bekannt.**

Der Erfindung liegt daher die Aufgabe zugrunde, eine einfache Wartung von Getrieben möglichst unabhängig von der Einbaulage des Getriebes in einer industriellen Anlage zu ermöglichen.

Erfindungsgemäß wird die Aufgabe bei dem Verfahren nach den in Anspruch 1 angegebenen Merkmalen gelöst.

Wichtige Merkmale der Erfindung bei dem Verfahren zum Herstellen eines Getriebes sind, dass das Getriebe ein Gehäuse und eine Welle mit zumindest einem Lager aufweist, das ein Unterteil und ein auf dem Unterteil aufsetzbares Oberteil aufweist,
wobei das Gehäuse einen Lagersitz zur Aufnahme des Lagers aufweist,
wobei ein erster Teilbereich, insbesondere eine erste Hälfte, des Lagersitzes am Unterteil ausgebildet ist und ein zweiter Teilbereich, insbesondere die andere Hälfte, des Lagersitzes am Oberteil ausgebildet ist,
wobei das Lager als Wälzlager ausgeführt ist und einen Innenring, Wälzkörper und einen Außenring aufweist,
wobei in einem ersten Verfahrensschritt das Lager auf die Welle aufgesteckt wird und der Außenring des Lagers von einem an der Welle befestigten Haltemittel in axialer Richtung begrenzt wird,
in einem zweiten Verfahrensschritt die Welle samt Lager und Haltemittel in das Unterteil eingelegt wird, insbesondere das Lager, insbesondere der Außenring des Lagers, vom ersten Teilbereich aufgenommen wird,
in einem dritten Verfahrensschritt das Oberteil auf das Unterteil aufgesetzt und mit dem Unterteil verbunden wird, insbesondere mittels Schrauben, wobei das Lager durch den ersten und den zweiten Teilbereich aufgenommen wird,
in einem vierten Verfahrensschritt eine Passscheibe an den Außenring angelegt wird,
in einem fünften Verfahrensschritt Schrauben in insbesondere axial gerichtete, Gewindebohrungen des Gehäuses, insbesondere des Unterteils und des Oberteils, eingeschraubt werden, wobei die Schraubenköpfe der Schrauben oder auf die Schrauben aufgesteckte Unterlegscheiben radial, insbesondere nach radial innen, derart am Gehäuse hervorragen, dass die Passscheibe durch die Schraubenköpfe oder durch die Unterlegscheiben begrenzt werden,
in einem sechsten Verfahrensschritt das Haltemittel entfernt wird und ein Lagerdeckel mit dem Gehäuse verbunden wird, der die Passscheibe, insbesondere und somit den Außenring, axial begrenzt.

Von Vorteil ist dabei, dass die Welle bei horizontalter Ausrichtung montierbar ist. Denn obwohl die Gravitationskraft als radiale Kraft eine Axialkraftkomponente bewirkt, welche den Außenring in axialer Richtung aus dem Lager herausdrücken möchte, ist mittels des Haltemittels die zur Welle relativ gemessene axiale Bewegungsfreiheit des Außenrings begrenzt. Dabei ist das Haltemittel als Federteil oder als festes Teil ausführbar. Eine Befestigung des Haltemittels in der Welle ist in einfacher Weise durch eine zentrische Gewindebohrung in der Stirnseite der Welle ermöglicht, in welche eine Schraube eingeschraubt wird, die vorzugsweise eine Scheibe auf den Innenring drückt und einen an der Scheibe abgestützten Haltering auf den Außenring. Der Haltering ist dabei vorzugsweise als konisch verformte Lochscheibe ausgeführt.

Somit ist also in einfacher Weise das axiale Herauswandern des Außenrings verhindert. Der Austausch oder Einbau des Lagers bei beliebiger Ausrichtung der Welle im Raum ist somit einfach ermöglicht. Daher ist auch eine Wartung von Getrieben unabhängig von der Einbaulage des Getriebes in einer industriellen Anlage in einfacher Weise ausführbar. Baulich zur Durchführung des Verfahrens ist nur eine zentrische Gewindebohrung an der Welle notwendig zur Befestigung des Haltemittels, welches aber nach Einbringen der Passscheiben und deren axialen Sicherung durch Schrauben entfernt werden darf und danach durch Montage des Lagerdeckels hohe axiale Kräfte, die im Betrieb auftreten abgefangen werden können.

Besonders vorteilhaft ist die Erfindung bei Industriegetrieben anwendbar, deren Gesamtmasse mehr als 100 kg beträgt.

Das Haltemittel begrenzt den Außenring in axialer Richtung. Entgegen dieser Richtung kann der Außenring nur über Drücken mittels der Wälzkörper auf den Innenring sich bewegen.

Allerdings ist der Innenring gegen eine Stufe der Welle angestellt, so dass auch in dieser Richtung eine Begrenzung erreicht ist.

Bei einer vorteilhaften Ausgestaltung ist das Haltemittel als Federteil ausgeführt, das an der Welle befestigbar und abstützbar ist, wobei das Federteil auf den Außenring des Lagers, insbesondere in axialer Richtung, drückt. Von Vorteil ist dabei, dass ein federndes und somit ein eine im Wesentlichen konstante Kraft aufweisendes Andrücken ermöglicht ist.

Bei einer vorteilhaften Ausgestaltung ist das Haltemittel als mit einer in eine Gewindebohrung der Welle eingeschraubten Schraube an der Welle befestigten Scheibe mit Haltering ausgeführt. Von Vorteil ist dabei, dass das Haltemittel mehrstückig aus einfach herstellbaren und Elementen zusammenstellbar ist.

Bei einer vorteilhaften Ausgestaltung weist die Scheibe einen axial hervorstehenden Kragenrand auf, der auf den Innenring drückt. Von Vorteil ist dabei, dass der Kragenrand in einfacher Weise durch Formgebung erzeugbar ist und die Scheibe durch Anliegen an der fein bearbeiteten Stirnfläche der Welle ausrichtbar ist. Somit ist der Kragenrand ebenfalls präzise ausgerichtet und ein am Umfang gleichmäßiges Andrücken des Innenrings erreichbar.

Bei einer vorteilhaften Ausgestaltung weist die Scheibe eine Innenkante auf, an der ein Haltering mit seinem radial inneren Rand abgestützt ist,
wobei der radial äußere Rand an dem Außenring abgestützt ist. Von Vorteil ist dabei, dass eine einfache Anordnung zum Andrücken und axialen Begrenzen des Außenrings erreicht ist, wobei der Außenring von der Scheibe radial beabstandet ist. Der Haltering überbrückt den radialen Abstand und überträgt die axiale Anpresskraft.

Bei einer vorteilhaften Ausgestaltung ist der Haltering eine konisch verformte Lochscheibe. Von Vorteil ist dabei, dass eine einfache Herstellung ermöglicht ist, da die Lochscheibe nur auf einen Konus verformend aufzupressen ist und somit eine einfache Herstellung ermöglicht ist.

Bei einer vorteilhaften Ausgestaltung ist die axiale Richtung parallel zu der Drehachse der Welle ausgerichtet. Von Vorteil ist dabei, dass eine Montage der Welle bei horizontaler Ausrichtung ermöglicht ist.

Bei einer vorteilhaften Ausgestaltung ist die Passscheibe radial außerhalb des Halterings angeordnet,
insbesondere wobei der von der Passscheibe überdeckte Radialabstandsbereich an den von dem Haltering überdeckten Radialabstandsbereich angrenzt. Von Vorteil ist dabei, dass die Passscheibe radial außerhalb des Halterings am Außenring anlegbar ist. Somit ist die Passscheibe anlegbar, während der Außenring noch axial gesichert ist.

Bei einer vorteilhaften Ausgestaltung weist der Lagerdeckel Ausnehmungen, insbesondere Aussparungen, auf, in welche die am Gehäuse befestigten Schrauben hineinragen. Von Vorteil ist dabei, dass die vorübergehend notwendige axiale Sicherung der Passscheibe durch das Einschrauben der Schrauben ermöglicht ist und das Abschrauben nicht notwendig ist. Somit ist eine erhöhte Sicherheit erreicht. Bei einer Wartung ist beispielsweise der Lagerdeckel abnehmbar und trotzdem die Passscheibe noch axial gesichert. Das Verfahren ist also rückwärts vollständig reversibel abarbeitbar. Dies ist auch bei einem Recycling oder Wiederaufbereiten des Getriebes vorteilhaft, was bei großen Getrieben wirtschaftlich sein kann.

Bei einer vorteilhaften Ausgestaltung ist der Lagerdeckel mit dem Gehäuse mittels weiteren Schrauben verbunden und begrenzt die Passscheibe axial,
insbesondere wobei die Passscheibe axial zwischen dem Lagerdeckel und dem Außenring angeordnet ist. Von Vorteil ist dabei, dass hohe Axialkräfte im Betrieb abfangbar sind.

Bei einer vorteilhaften Ausgestaltung sind die Drehachsen der Wälzkörper Tangenten eines Konus, dessen Spitze einen geringeren Abstand zum Lagerdeckels oder zur Scheibe aufweist als zur Welle. Von Vorteil ist dabei, dass das Lager als Kegelrollenlager ausführbar ist.

Wichtige Merkmale bei **einem** System zur Durchführung eines vorgenannten Verfahrens sind, dass das System ein Gehäuse und eine Wellenanordnung aufweist, welche eine Welle und ein auf die Welle aufgestecktes Lager, insbesondere Schräglager, insbesondere Kegelrollenlager, aufweist,
wobei das Lager einen Innenring und einen Außenring sowie Wälzkörper aufweist,
wobei ein an der Welle befestigtes Haltemittel als axiale Begrenzung des Außenrings und des Innenrings fungiert.

Von Vorteil ist dabei, dass ein Haltemittel zum axialen Begrenzen des Außenrings die Montage unabhängig von der Ausrichtung ermöglicht. Insbesondere ist die Welle in horizontaler Ausrichtung in das Gehäuse, insbesondere in das Unterteil des Gehäuses, einsetzbar.

Bei einer vorteilhaften Ausgestaltung **des Systems** weist die Welle an ihrem dem Haltemittel zugewandten Stirnseite eine zentrische Gewindebohrung auf, in welche eine Schraube eingeschraubt ist, deren Schraubenkopf gegen eine Scheibe drückt,
wobei ein axial hervorstehender Kragenrand der Scheibe auf den Innenring des Lagers drückt,
wobei die Scheibe einen Haltering auf den Außenring drückt. Von Vorteil ist dabei, dass die Welle mit einer Gewindebohrung versehen werden muss. Somit ist eine geringere Masse und Trägheitsmoment erreichbar. Die Erfindung ist außerdem einfach ausführbar.

Bei einer vorteilhaften Ausgestaltung **des Systems** ist der Innenring gegen eine Wellenschulter, insbesondere gegen eine an der Welle ausgebildete Stufe, angestellt. Von Vorteil ist dabei, dass die Wellenschulter einfach fertigbar ist.

Bei einer vorteilhaften Ausgestaltung **des Systems** ist am Unterteil des Gehäuses des Getriebes ein Teilbereich eines Lagersitzes ausgebildet, in welchem der Außenring des Lagers aufgenommen ist. Von Vorteil ist dabei, dass das Lager in den Lagersitz absenkbar ist und dabei aufgenommen wird. Somit ist das Lager nach dem Absenken teilweise, insbesondere zur Hälfte, aufgenommen im Unterteil. Danach ist das Oberteil auf das Unterteil aufsetzbar und somit das Lager im restlichen Lagersitzes des Oberteils aufnehmbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

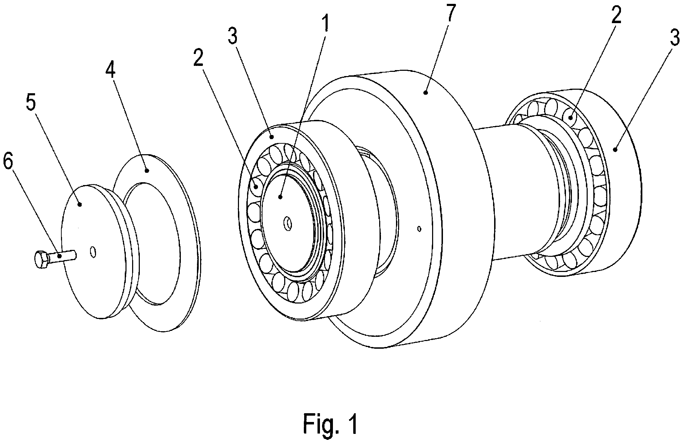

In der Figur 1 ist ein erster Verfahrensschritt zum Herstellen eines Getriebes veranschaulicht, wobei ein Haltering 4 zum Fixieren eines Außenrings 3 eines Lagers für eine Welle 1 von einer Scheibe 5 axial begrenzt wird.
In der Figur 2 ist das Ergebnis des ersten Herstellverfahrensschritts dargestellt.
In der Figur 3 ist als nächster Verfahrensschritt das Einsetzen der Welle 1 in ein Unterteil eines Gehäuses des Getriebes dargestellt.
In der Figur 4 ist das Anbringen einer Passscheibe 50 veranschaulicht.
In der Figur 5 ist das Sichern der Passscheibe 50 mittels Schraube 51 dargestellt.
In der Figur 6 ist das Anbringen eines Lagerdeckels 60 dargestellt, der eine Aussparung für die Schraube 51 aufweist und die Passscheibe 50 axial begrenzt.

Wie in den Figuren dargestellt, ist eine Welle 1 des Getriebes mittels Kegelrollenlager drehbar gelagert.

Das Getriebe ist vorzugsweise als Industriegetriebe ausgeführt, dessen Masse mehr als 100 kg, insbesondere mehr als 1000 kg beträgt.

Dabei ist das erfindungsgemäße Herstellverfahren geeignet, die Welle 1 bei horizontaler Ausrichtung zu montieren, also ins Getriebe einzuführen.

Hierzu weist das Getriebe ein geteiltes Gehäuse, insbesondere Splitgehäuse, auf, wobei das Gehäuse ein Unterteil und ein darauf aufgesetztes Oberteil aufweist.

Jedes Lager weist einen Innenring 20 auf, der auf die Welle 1 aufgesteckt ist, und einen Außenring 3, der die zwischen dem Innenring 20 und dem Außenring 3 angeordneten Wälzkörper 2 des jeweiligen Lagers radial umgibt.

Da die Wälzkörper zylindrisch ausgeführt sind, aber die Drehachsen der Wälzkörper 2 als Tangenten an einen Kegel, insbesondere Konus, ausgerichtet sind, wirkt auf den Außenring 3 eine axial gerichtete Kraft, die ein Abrutschen des Außenrings 3 bewirken könnte.

Um dies zu verhindern, wird im ersten Verfahrensschritt das Hilfsmittel angebracht.

Die am Gehäuse ausgebildete Lageraufnahme, also der Lagersitz, ist auf das Unterteil 30 des Gehäuses und das in den Figuren nicht gezeigte Oberteil aufgeteilt.

Vorzugsweise ist das Oberteil spiegelsymmetrisch zum Unterteil 30 ausgeführt und die Lageraufnahme somit zur Hälfte im Unterteil 30 und zur anderen Hälfte im Oberteil ausgeführt. Durch die Halbierung des Lagersitzes ist ein Einfädeln der Welle aus vertikaler Richtung ermöglicht.

Die Welle 1 ist vorzugsweise horizontal ausgerichtet.

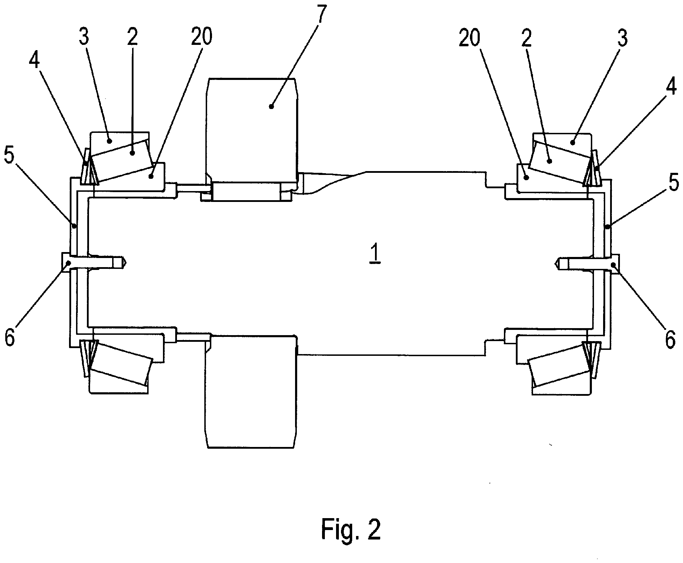

Das auf der Welle 1 vormontierte und axial gesicherte Lager ist in Figur 2 dargestellt.

Hierbei ist eine Schraube 6 in eine mittig in die Welle 1 eingesetzte Schraube 6 vorgesehen. Die Welle 1 weist hierfür eine koaxial zur Drehachse der Welle angeordnete und insbesondere axial ausgerichtete Gewindebohrung auf, in welche die Schraube 6 eingeschraubt ist, deren Schraubenkopf direkt oder über eine zwischengeordnete Unterlegescheibe eine Scheibe 5 gegen den Haltering 4 drückt, der somit auf den Außenring 3 drückt. Somit ist ein axiales Abrutschen des Außenrings 3 verhinderbar.

Zur Druckbegrenzung ist die Scheibe am Innenring 20 des Lagers abgestützt, wie in Figur 2 erkennbar ist.

Hierzu weist die Scheibe einen axial hervorstehenden Kragenrand auf, der am Innenring 20 anliegt. In einer in Umfangsrichtung umlaufenden Stufe der Scheibe 5 mit in Umfangsrichtung ebenfalls umlaufenden Innenkante zwischen diesem Kragenrand und dem Grundkörper der Scheibe 5 liegt der Haltering 4 insbesondere mit seinem radialen Innenrad an. Der radiale Außenrand des Halterings 4 liegt an dem Außenring 3 an.

Der Haltering 4 ist konisch geformt. Somit ist zur Herstellung eine Lochscheibe verwendbar, der auf einen zur Ringachse des Lochrings koaxial ausgerichteten Kegel gepresst wird und somit konisch verformt ist.

Der Innenring 20 des Lagers ist gegen eine Stufe der Welle 1 angestellt.

Die Scheibe 5 liegt mit ihrem Kragenrand an dem Innenring 20 an und ist von der Welle 1 beabstandet, insbesondere obwohl der von der Welle 1 überdeckte axiale Bereich mit dem von der Scheibe 5 überdeckten axialen Bereich überlappt.

Auf der Welle 1 ist das Zahnrad 7 drehfest befestigt. Somit ist die Welle 1 als abtreibende Welle des Getriebes verwendbar.

Der von dem Innenring 20 überdeckte axiale Bereich grenzt an den von der Scheibe 5 überdeckten axialen Bereich an.

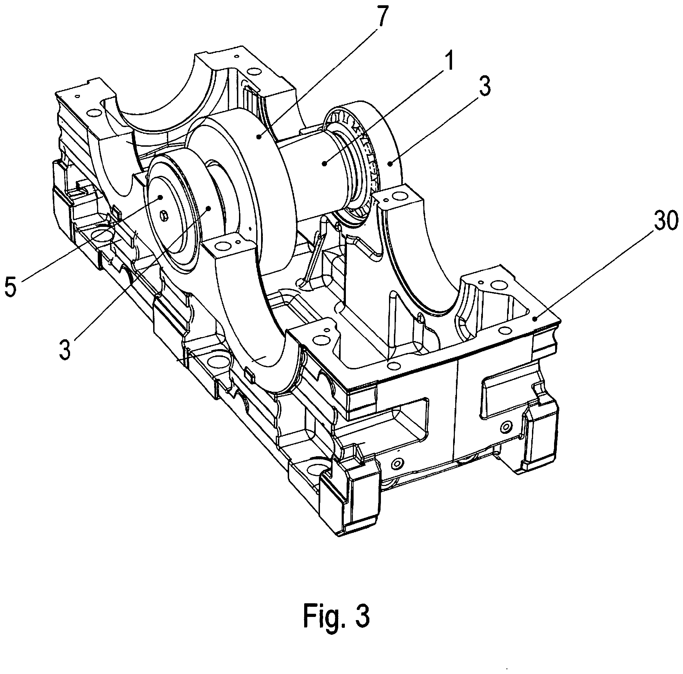

Wenn somit im ersten Herstellverfahrensschritt das jeweilige Lager auf die Welle aufgesteckt und der jeweilige Außenring 3 von dem Haltering 4 begrenzt ist, wird die so mit Lagern vorkomplettierte Welle, deren Drehachse in horizontaler Richtung gerichtet ist, aus vertikaler Richtung in den am Unterteil 30 vorgesehenen Lagersitz eingeführt, wobei der Außenring 3 in den am Unterteil 30 vorhandenen Bereich des Lagersitzes eingelegt wird, wie in Figur 3 dargestellt.

Danach wird das Oberteil des Gehäuses derart auf das Unterteil 30 aufgesetzt, dass der am Oberteil des Gehäuses ausgebildete Bereich des Lagersitzes den Außenring 3 umgibt und berührt. Auf diese Weise ist dann nach dem Aufsetzen der Außenring 3 unterbrechungsfrei im gesamten, am aus dem Unterteil 30 und dem Oberteil gebildeten Lagersitz aufgenommen.

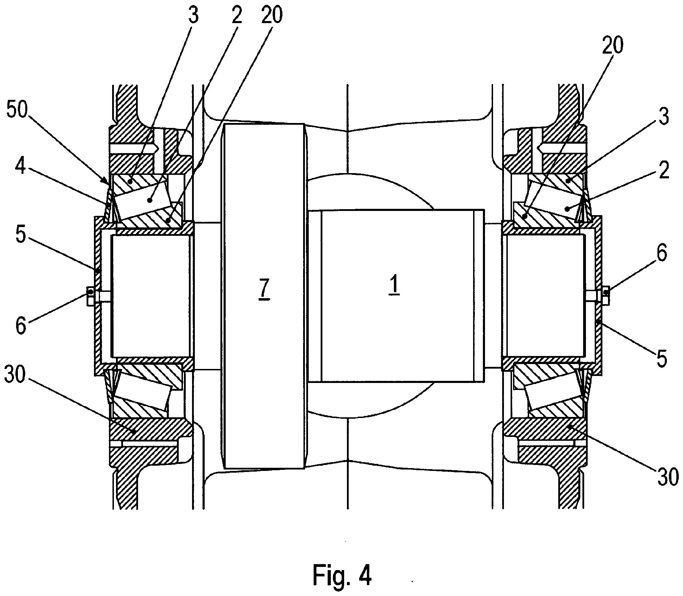

Wie in Figur 4 gezeigt, werden danach in einem nächsten Herstellverfahrensschritt Passscheiben 50 an den Außenring 3 angelegt, welche den Abstand zwischen Außenseite des Gehäuses und Schulter, insbesondere Außeneck, des Außenrings 3 zumindest fast oder möglichst, insbesondere bis auf ein Spiel, ausgleichen.

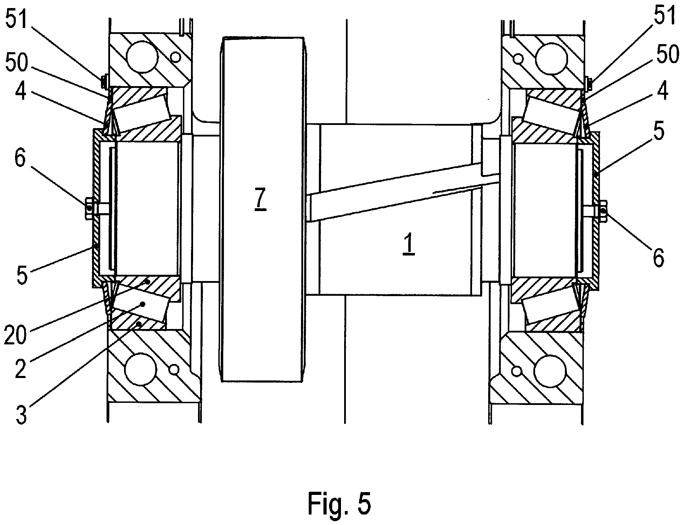

Wie in Figur 5 dargestellt, werden dann Schrauben 51 in Gewindebohrungen des Gehäuses, also des Unterteils oder Oberteils eingeschraubt, so dass die Schraubenköpfe indirekt über zwischen dem jeweiligen Schraubenkopf und dem Gehäuse zwischengeordnete Unterlegscheiben oder alternativ direkt selbst die Passscheiben axial sichern.

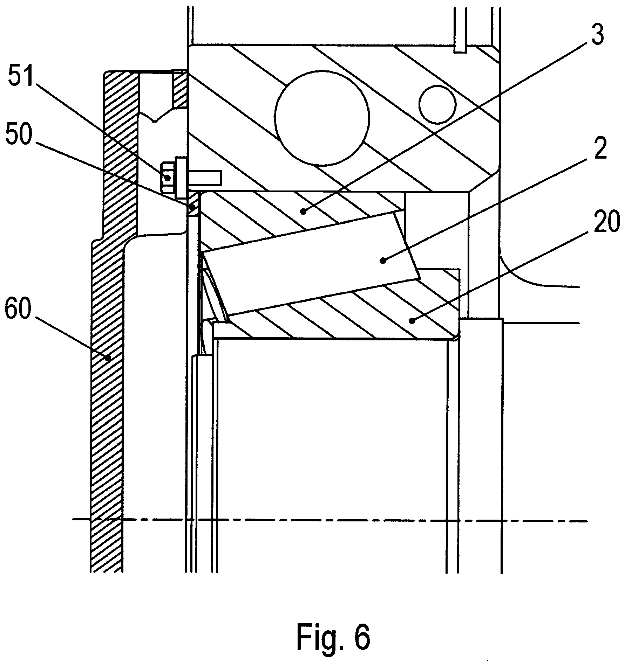

Wie in Figur 6 dargestellt, wird die Schraube 6 abgeschraubt, die Scheibe 5 entfernt und der Haltering 4 ebenso entfernt. Denn das axiale Begrenzen des Außenrings 3 ist nun von den Schrauben 51 ausführbar. Danach wird der Lagerdeckel 60 mittels Schrauben am Gehäuse, insbesondere am Unterteil 30 und am Oberteil, befestigt.

Der Lagerdeckel 60 weist Aussparungen, insbesondere Ausnehmungen, auf, sodass die Schrauben 51 zwar in axialer Richtung und in radialer Richtung beabstandet sind vom Lagerdeckel 60 aber der von der Schraube 51 überdeckte Radialabstandsbereich innerhalb des von dem Lagerdeckel 60 überdeckten Radialabstandsbereich angeordnet ist.

In Umfangsrichtung zwischen den am Umfang auf gleichem Radialabstandsbereich angeordneten Schrauben 51 weist der Lagerdeckel 60 in den Figuren nicht dargestellte, in radialer Richtung sich erstreckende Stege auf, welche sowohl an der Passscheibe 50 als auch an der dem Lagerdeckel 60 zugewandten Seite des Gehäuses anliegen, so dass die Passscheiben 50 im Wesentlichen durch den Lagerdeckel 60 begrenzt sind.

Der Lagerdeckel 60 deckt das Lager zur Umgebung hin ab. Hierzu umfasst der von dem Lagerdeckel 60 überdeckte Radialabstandsbereich den von der Welle 1 umfassten Radialabstandsbereich und den von dem Lager, insbesondere Innenring 20, Wälzkörper 2 und Außenring 3, bedeckten Radialabstandsbereich und überlappt mit dem von Gehäuse überdeckten Radialabstandsbereich.

Der Lagerdeckel 60 ist derart dimensioniert, dass er die im Betrieb auftretenden Axialkräfte abfängt. Die Schraube 51 ist nur derart dimensioniert, dass die Montage ausführbar ist, also das Eigengewicht abfangbar ist.

Die axiale Richtung ist parallel zur Drehachse der Welle 1 ausgerichtet.

Bei weiteren erfindungsgemäßen Ausführungsbeispielen werden zusätzlich zu den Passscheiben 51 oder alternativ Distanzelemente verwendet.

Bei weiteren erfindungsgemäßen Ausführungsbeispielen wird statt der Scheibe 5 und dem Haltering 4 ein an einem Stempelteil abgestütztes Federteil verwendet, so dass nicht durch Formgebung, sondern durch eine im Wesentlichen konstante Kraft eingesetzt wird.

Bei weiteren erfindungsgemäßen Ausführungsbeispielen wird ein weiteres Verzahnungsteil auf der Welle drehfest befestigt, so dass die Welle als Zwischenwelle des Getriebes verwendbar ist.

### Bezugszeichenliste

1 Welle
2 Wälzkörper
3 Außenring
4 Haltering
5 Scheibe
6 Schraube
7 Zahnrad
20 Innenring
30 Unterteil des Gehäuses
50 Passscheibe
51 Schraube
60 Lagerdeckel

## Patentansprüche

1. Verfahren zum Herstellen eines Getriebes,
wobei das Getriebe ein Gehäuse und eine Welle (1) mit zumindest einem Lager aufweist, wobei
das Gehäuse ein Unterteil (30) und ein auf dem Unterteil (30) aufsetzbares Oberteil aufweist,
wobei das Gehäuse einen Lagersitz zur Aufnahme des Lagers aufweist,
wobei ein erster Teilbereich, insbesondere eine erste Hälfte, des Lagersitzes am Unterteil (30) ausgebildet ist und ein zweiter Teilbereich, insbesondere die andere Hälfte, des Lagersitzes am Oberteil ausgebildet ist,
wobei das Lager als Wälzlager ausgeführt ist und einen Innenring (20), Wälzkörper (2) und einen Außenring (3) aufweist,
wobei in einem ersten Verfahrensschritt das Lager auf die Welle (1) aufgesteckt wird und der Außenring (3) des Lagers von einem an der Welle (1) befestigten Haltemittel (4,5,6) in axialer Richtung begrenzt wird,
in einem zweiten Verfahrensschritt die Welle (1) samt Lager und Haltemittel in das Unterteil (30) eingelegt wird, das Lager, insbesondere der Außenring (3) des Lagers, vom ersten Teilbereich aufgenommen wird,
in einem dritten Verfahrensschritt das Oberteil auf das Unterteil (30) aufgesetzt und mit dem Unterteil (30) verbunden wird, insbesondere mittels Schrauben, wobei das Lager durch den ersten und den zweiten Teilbereich aufgenommen wird,
in einem vierten Verfahrensschritt eine Passscheibe (50) an den Außenring angelegt wird,
in einem fünften Verfahrensschritt Schrauben (51) in insbesondere axial gerichtete, Gewindebohrungen des Gehäuses, insbesondere des Unterteils (30) und des Oberteils, eingeschraubt werden, wobei die Schraubenköpfe der Schrauben (51) oder auf die Schrauben aufgesteckte Unterlegscheiben nach radial innen, derart am Gehäuse hervorragen, dass die Passscheibe (50) durch die Schraubenköpfe oder durch die Unterlegscheiben begrenzt werden,
in einem sechsten Verfahrensschritt das Haltemittel entfernt wird und ein Lagerdeckel (60) mit dem Gehäuse verbunden wird, der die Passscheibe (50), insbesondere und somit den Außenring, axial begrenzt.

2. Verfahren nach Anspruch 1,
**dadurch gekennzeichnet, dass**
das Haltemittel als Federteil ausgeführt ist, das an der Welle befestigbar und abstützbar ist, wobei das Federteil auf den Außenring des Lagers, insbesondere in axialer Richtung, drückt.

3. Verfahren nach Anspruch 1, **dadurch gekennzeichnet, dass** das Haltemittel als mit einer in eine Gewindebohrung der Welle eingeschraubten Schraube (6) 10 an der Welle befestigten Scheibe (5) mit Haltering (4) ausgeführt ist.

4. Verfahren nach Anspruch 3, **dadurch gekennzeichnet, dass**
die Scheibe einen axial hervorstehenden Kragenrand aufweist, der auf den Innenring drückt.

5. Verfahren nach einem der Ansprüche 3 und 4, **dadurch gekennzeichnet, dass**
die Scheibe eine Innenkante aufweist, an der ein Haltering mit seinem radial inneren Rand abgestützt ist,
wobei der radial äußere Rand an dem Außenring abgestützt ist.

6. Verfahren nach Anspruch 5, **dadurch gekennzeichnet, dass**
der Haltering eine konisch verformte Lochscheibe ist.

7. Verfahren nach einem der vorangegangenen Ansprüche,
**dadurch gekennzeichnet, dass**
die axiale Richtung parallel zu der Drehachse der Welle ausgerichtet ist.

8. Verfahren nach einem der Ansprüche 5 und 6, **dadurch gekennzeichnet, dass**
die Passscheibe radial außerhalb des Halterings angeordnet ist,
insbesondere wobei der von der Passscheibe überdeckte Radialabstandsbereich an den von dem Haltering überdeckten Radialabstandsbereich angrenzt.

9. Verfahren nach einem der vorangegangenen Ansprüche,
**dadurch gekennzeichnet, dass**
der Lagerdeckel Ausnehmungen, insbesondere Aussparungen, aufweist, in welche die am Gehäuse befestigten Schrauben hineinragen.

10. Verfahren nach einem der vorangegangenen Ansprüche,
**dadurch gekennzeichnet, dass**
der Lagerdeckel mit dem Gehäuse mittels weiteren Schrauben verbunden ist und die Passscheibe axial begrenzt,
insbesondere wobei die Passscheibe axial zwischen dem Lagerdeckel und dem Außenring angeordnet ist.

11. Verfahren nach einem der vorangegangenen Ansprüche,
**dadurch gekennzeichnet, dass**
die Drehachsen der Wälzkörper Tangenten eines Konus sind, dessen Spitze einen geringeren Abstand zum Lagerdeckels oder zur Passscheibe (50) aufweist als zur Welle.

## Claims

1. A method for producing a gear unit,
wherein the gear unit has a housing and a shaft (1) with at least one bearing, wherein
the housing has a lower part (30) and an upper part which can be fitted on the lower part (30),
wherein the housing has a bearing seat for receiving the bearing,
wherein a first partial region, in particular a first half, of the bearing seat is formed on the lower part (30) and a second partial region, in particular the other half, of the bearing seat is formed on the upper part,
wherein the bearing is embodied as a rolling bearing and has an inner ring (20), rolling elements (2) and an outer ring (3),
wherein in a first method step the bearing is mounted on the shaft (1) and the outer ring (3) of the bearing is limited in the axial direction by a retaining means (4, 5, 6) fastened to the shaft (1),
in a second method step, the shaft (1) plus bearing and retaining means is placed in the lower part (30), the bearing, in particular the outer ring (3) of the bearing, is received by the first partial region,
in a third method step, the upper part is fitted on the lower part (30) and is connected to the lower part (30), in particular by means of screws, wherein the bearing is received by the first and the second partial region,
in a fourth method step, a shim ring (50) is laid on the outer ring,
in a fifth method step, screws (51) are screwed into in particular axially directed threaded bores in the housing, in particular in the lower part (30) and the upper part, wherein the screw heads of the screws (51) or washers mounted on the screws protrude radially inwards on the housing such that the shim ring (50) is limited by the screw heads or by the washers,
in a sixth method step, the retaining means is removed and a bearing cover (60) is connected to the housing, which bearing cover axially limits the shim ring (50), in particular and hence the outer ring.

2. A method according to claim 1,
**characterised in that**
the retaining means is embodied as a spring part which can be fastened to and supported on the shaft, with the spring part pressing on the outer ring of the bearing, in particular in the axial direction.

3. A method according to claim 1,
**characterised in that**
the retaining means is embodied as a disc (5), with retaining ring (4), which is fastened to the shaft with a screw (6) screwed into a threaded bore in the shaft.

4. A method according to claim 3,
**characterised in that**
the disc has an axially projecting collar edge which presses on the inner ring.

5. A method according to one of claims 3 and 4,
**characterised in that**
the disc has an inner edge on which a retaining ring is supported with its radially inner edge,
with the radially outer edge being supported on the outer ring.

6. A method according to claim 5,
**characterised in that**
the retaining ring is a perforated disc deformed in a cone shape.

7. A method according to one of the preceding claims,
**characterised in that**
the axial direction is oriented parallel to the axis of rotation of the shaft.

8. A method according to one of claims 5 and 6,
**characterised in that**
the shim ring is arranged radially outside the retaining ring,
in particular with the radial clearance region covered by the shim ring adjoining the radial clearance region covered by the retaining ring.

9. A method according to one of the preceding claims,
**characterised in that**
the bearing cover has recesses, in particular cutouts, into which the screws fastened to the housing protrude.

10. A method according to one of the preceding claims,
**characterised in that**
the bearing cover is connected to the housing by means of further screws and axially limits the shim ring,
in particular with the shim ring being arranged axially between the bearing cover and the outer ring.

11. A method according to one of the preceding claims,
**characterised in that**
the axes of rotation of the rolling elements are tangents of a cone, the tip of which is at a lesser distance from the bearing cover or from the shim ring (50) than from the shaft.

## Revendications

1. Procédé dévolu à la fabrication d'une transmission,
ladite transmission comprenant un carter et un arbre (1) muni d'au moins un palier, sachant que
le carter comporte une partie inférieure (30) et une partie supérieure pouvant être mise en place sur ladite partie inférieure (30),
ledit carter étant doté d'un siège de roulement conçu pour recevoir le palier,
une première région partielle, notamment une première moitié du siège de roulement, étant façonnée sur la partie inférieure (30) et une seconde région partielle, notamment l'autre moitié dudit siège de roulement, étant façonnée sur la partie supérieure,
ledit palier étant réalisé en tant que palier de roulement et comprenant une bague intérieure (20), des corps de roulement (2) et une bague extérieure (3),
sachant que, lors d'une première étape opératoire, le palier est emboîté sur l'arbre (1) et la bague extérieure (3) dudit palier est délimitée, dans la direction axiale, par un moyen de retenue (4, 5, 6) fixé audit arbre (1),
lors d'une deuxième étape opératoire, ledit arbre (1) est inséré dans ladite partie inférieure (30) conjointement au palier et au moyen de retenue, le palier, en particulier la bague extérieure (3) dudit palier, étant reçu(e) par la première région partielle,
lors d'une troisième étape opératoire, la partie supérieure est mise en place sur la partie inférieure (30) et est reliée à ladite partie inférieure (30), au moyen de vis en particulier, le palier étant alors reçu par lesdites première et seconde régions partielles,
lors d'une quatrième étape opératoire, une rondelle d'ajustement (50) est mise en applique sur ladite bague extérieure,
lors d'une cinquième étape opératoire, des vis (51) sont vissées dans des perçages taraudés dirigés, en particulier, dans le sens axial et pratiqués dans le carter, notamment dans la partie inférieure (30) et dans la partie supérieure, les têtes des vis (51), ou bien des rondelles de calage emboîtées sur lesdites vis, faisant alors saillie radialement vers l'intérieur au-delà dudit carter, de façon telle que la rondelle d'ajustement (50) soit délimitée par lesdites têtes des vis, ou par lesdites rondelles de calage,
lors d'une sixième étape opératoire, le moyen de retenue est enlevé et un couvercle (60) de palier délimitant notamment ladite rondelle d'ajustement (50), et donc la bague extérieure dans le sens axial, est relié audit carter.

2. Procédé selon la revendication 1,
**caractérisé par le fait que**
le moyen de retenue est réalisé sous la forme d'une pièce élastique pouvant être fixée à l'arbre, sur lequel elle peut prendre appui,
ladite pièce élastique exerçant une pression sur la bague extérieure du palier, dans la direction axiale en particulier.

3. Procédé selon la revendication 1,
**caractérisé par le fait que**
le moyen de retenue est réalisé sous la forme d'un disque (5) pourvu d'un anneau de maintien (4) et fixé à l'arbre à l'aide d'une vis (6) vissée dans un perçage taraudé dudit arbre.

4. Procédé selon la revendication 3,
**caractérisé par le fait que**
le disque présente un bord de collerette faisant saillie dans le sens axial, qui exerce une pression sur la bague intérieure.

5. Procédé selon l'une des revendications 3 et 4,
**caractérisé par le fait que**
le disque comporte une arête intérieure contre laquelle un anneau de maintien prend appui par son bord radialement intérieur,
le bord radialement extérieur étant en appui contre la bague extérieure.

6. Procédé selon la revendication 5,
**caractérisé par le fait que**
l'anneau de maintien est un disque perforé à déformation tronconique.

7. Procédé selon l'une des revendications précédentes,
**caractérisé par le fait que**
la direction axiale est orientée parallèlement à l'axe de rotation de l'arbre.

8. Procédé selon l'une des revendications 5 et 6,
**caractérisé par le fait que**
la rondelle d'ajustement est implantée radialement à l'extérieur de l'anneau de maintien, sachant notamment que la plage d'espacements radiaux couverte par ladite rondelle d'ajustement est limitrophe de la plage d'espacements radiaux couverte par ledit anneau de maintien.

9. Procédé selon l'une des revendications précédentes,
**caractérisé par le fait que**
le couvercle de palier est pourvu d'évidements, en particulier d'échancrures dans lesquel(le)s pénètrent les vis fixées au carter.

10. Procédé selon l'une des revendications précédentes,
**caractérisé par le fait que**
le couvercle de palier est relié au carter au moyen de vis supplémentaires, et délimite la rondelle d'ajustement dans le sens axial,
laquelle rondelle d'ajustement est notamment interposée, dans le sens axial, entre ledit couvercle de palier et la bague extérieure.

11. Procédé selon l'une des revendications précédentes,
**caractérisé par le fait que**
les axes de rotation des corps de roulement sont des tangentes à un cône dont la pointe présente un espacement moindre, vis-à-vis du couvercle de palier ou de la rondelle d'ajustement (50), que vis-à-vis de l'arbre.
